# EUROPEAN PATENT APPLICATION

(11) **EP 2 521 074 A1**
(43) Date of publication of application: **07.11.2012**
(21) Application number: 11305518.0
(22) Date of filing: 02.05.2011
(51) Int. Cl.: G06Q 10/00, G06Q 50/00

(54) **Method and system for an improved reservation system optimizing repeated search requests**

(71) Applicant: Amadeus S.A.S., 06410 Biot (FR)
(72) Inventor: Aubry, Jean-Philippe, 06160, Antibes - Juan Les Pins (FR); Janin, Benoit, 06410, Biot (FR); Daniello, Rudy, 06200, Nice (FR); Isnardy, Luc, 06800, Cagnes sur mer (FR); Reynaud, Claudine, 06130, Grasse (FR)
(74) Representative: Samson & Partner

(57) **Abstract**

The method according to a preferred embodiment of the present invention allows an improved travel request service to end-users who request proposals for a trip from a Global Distribution System (GDS). This uses a new travel request which comprises a wider range for each search parameter than previous travel requests from the prior art. The new travel request includes many different ranges of parameters in the same travel request whereas the prior art travel request has to be repeated for each different requested value for each search parameter. The method according to a preferred embodiment of the present invention provides a combination of two modules, a master module and a worker module, to carry out the improved travel request service

## Description

### Field of the invention

The present invention relates to the field of reservation systems, particularly to a method and system for a massive computation platform optimizing repeated search requests.

### Background of the invention

State of the art reservation systems are normally based on dedicated Global Distribution Systems (GDS), as for example airlines reservation systems which provide flight search applications for shopping business like flight booking. Flight search requests coming from clients require exhaustive search into the GDS data. This involves a lot of computation and may take some time. To minimize this delay, clients usually have few degrees of freedom: they must specify origin and destination cities, outbound and inbound dates, operating carrier, cabin class of the requested journey. While this is advantageous for system performance and for response times, it is not ideal for customers who would certainly appreciate a more user friendly interaction with wider freedom in the parameters choice.

Another business domain developed by airline companies and travel agencies where an improved management of user requests would be highly appreciated is the so called pre-shopping. With this term we refer to those activities which require interrogations of data bases through a reservation system but which do not necessarily result in a proper booking. This activities are of key importance for the airline or agency, because, even if they do not generate an immediate revenue can influence the future choice of possible customers. It would be highly appreciated a tool able to provide a zero-delay response to a client's query with many degrees of freedom. As an example let's suppose a client requesting information for flights originating from Paris, between June and September, two weeks long, in a sunny place. With a regular flight search application, a client would need to specify a precise destination and to perform as many requests as desired destinations and possible date combinations.

Another possible application could be a reservation system with a Revenue Management process aiming at increasing profitability rather than simply increasing flight booking. Example: airline companies might want to adapt their prices based on computer models which rely on the exhaustive prices of their proposed flights (e.g. all cities across all dates) and based on booking forecasts. With state of the art systems this activity would be very complex and would take a lot of resources and operator efforts.

Yet another possible application is Fares Analysis for statistic purposes, i.e. following the evolution of one's ticket prices according to updates filed to GDS. Example: evaluating filed prices through comparison of journey prices computed from filed fares and rules, comparison of current price with previous one for a similar item, comparison with own cost estimates.

The common characteristic of the above application examples is the need of very high volumes of flight recommendations to be relevant.
For example Pre-Shopping applications require a large panel of solutions to provide attractive results to clients, Revenue Management applications require the exhaustive list of flight recommendations since its dynamic pricing policy relies on this model, while Fares Analysis applications require the exhaustive list of flight recommendations in order to track prices evolution effectively.

As opposed to shopping business domain, the purpose of those applications is not the booking. As such, the computations required for generating flight recommendations need not to be performed for each client's query: one may trade response accuracy for response time. Since the flight recommendations need not to be recomputed for each client's query, their pre-computation by the GDS can be spread over several hours. Also, since those applications rely on pre-computed flights recommendations, GDS may spread the data processing needed for feeding those systems over several hours.

A known method for implementing the above applications is the so-called Transactional external shooter. To exhaustively feed its pre-shopping or revenue managements system a customer can shoot a series of transactions to a shopping application provided by a GDS. The transactions to be shot have to cover the combination of all whished outbound dates, all whished markets, etc. Such method has some obvious drawbacks, e.g. a small increase in the number of queries would result in a big increase of combinatorial complexity, and thus increase the number of transactions the customer must shoot. The shot transactions corresponding to the global request gather common parts which have to be computed for each transactions: redundant checks, redundant data access and redundant processing are thus performed. The higher the volumes of computed data, the more expensive is the cost (in terms of resource consumption) of these redundant operations. Even if the shot application provides extended calendars or multi-options choice, the optimization opportunities are still partial due to the lack of global knowledge concerning all the transactions to shoot. For the customer, the computation of results requires more time to be processed. For the GDS, it induces unnecessary resource consumption for the computation of the redundancies. Moreover since the shooter is external to the GDS, the resource consumption is not under control. And since the need for data for pre-shopping, revenue managements or fares analysis system is huge, an unexpectedly high amount of traffic would endanger service level agreements with other customers.

Another known technique is to implement a pre-shopping system where shopping traffic can be captured to update the system. For any transaction requested by a client for booking purpose, if it matches requirement of the pre-shopping system, its results are both returned to the client and to the pre-shopping server. A drawbacks of this prior art method is that the customer has no control over data to use for computation. It is thus not applicable to feed a revenue management system since there is no guarantee that result is exhaustive. Moreover, capturing traffic is a static approach and is not adaptable to specific constraints. Pre-shopping and revenue management system can only benefit from characteristics of existing products.

To ensure an effective handling of the above described high volume of data without needing an intense operator activity and an unacceptable resource usage an improved reservation system able to perform massive searches avoiding useless duplication of queries would be needed.

Patent US 5,495,606 discloses a system for improving a search process in a database. This system can be added to an existing system of the prior art to improve the processing time of the existing system. US 5,495,606 discloses a system which comprises several query processor modules that can all work in parallel. Each query processor module comprises a master query processor and a slave processor. The master query processor receives the query and sends back the response to the end-user. The master query processor contains a query splitter to split the queries into multiple split queries. The master query processor also contains a scheduler to process the split queries on an appropriate slave query processor. Each slave query processor can then submit each split query to a specific database manager module to access the database in a read only configuration. As a result, all the split queries can be processed in parallel by each query processor module and the processing time is optimized. As the database is in a read-only configuration, no update of the database can occur during the processing of a split query; this also improves the processing time of the split queries. The method disclosed in US 5,495,606 requires a very powerful data processing system with multiple processors and does not solve the problem of possible duplication of search requests: the same query could be repeated several times as there is no optimization of the requests being performed by the system.

### Object of the invention

An object of the present invention is to alleviate at least some of the problems associated with the prior art systems.

According to one aspect of the present invention there is provided a method in a reservation system for managing pre-shopping travel queries, the reservation system having access to a plurality of travel databases containing information on travel availability and fares according to a plurality of parameters, each travel query including a set of preferences each preference being related to a parameter selected among the plurality of parameters, the method including: receiving a plurality of travel queries, each travel query being associated to a user; pre-processing the plurality of travel queries, the pre-processing including: extracting from each query at least one simple request element; sorting the plurality of request elements according to at least one parameter; in case of more than one request element containing the same preference for the same at least one parameter, deleting duplicated request elements; dividing the request elements into subset according to predetermined criteria; forwarding each subset of request elements to a process module which performs the request element interrogating the plurality of databases; collecting the results form the process modules and issuing a response to users for each travel query.

According to a second aspect of the present invention there is provided a system comprising one or more components adapted to perform the method described above.

According to a further embodiment of the present invention there is provided a computer program comprising instructions for carrying out the method described above when said computer program is executed on a computer system.

The method according to a preferred embodiment of the present invention allows an improved travel request service to end-users who request proposals for a trip from a Global Distribution System (GDS). This uses a new travel request which comprises a wider range for each search parameter than previous travel requests from the prior art. The new travel request includes many different ranges of parameters in the same travel request whereas the prior art travel request has to be repeated for each different requested value for each search parameter.

The method according to a preferred embodiment of the present invention provides a combination of two modules, a master module and a worker module, to carry out the improved travel request service. The master module extracts the travel requests from all users. The master module splits the travel queries into unitary requests and removes duplicated travel requests to obtain optimized travel requests. The master module then forwards the optimized travel requests to the worker module. Based on the content of the optimized travel requests, the worker module directly runs the corresponding process module such as a journey process module, an availability process module or a fare engine process module for the required computation. As a result, the worker module provides the results of a search based on the optimized travel requests. The worker module then sends the results of the optimized travel requests to the master module. The master module then displays the results to the end-users.

The method according to a preferred embodiment of the present invention is based on the implementation of two modules, the master module and the worker module, to process a broad travel query from a user. The master module analyses all of the travel queries from all users to provide optimized travel requests. The worker module processes and submits the optimized travel requests to specific process modules.

The data computation method for pre-shopping, revenue management and fares analysis systems feeding purpose, interacts with other GDS subsystems already used in the shopping business (journey solution process, availability checking process, faring process ...).

Some of the advantages obtained with a preferred embodiment of the present method are:
- The products provided by the platform enable an exhaustive and consistent feeding of pre-shopping and revenue management systems Thanks to business rules and applicative plug-ins implementing business logic, the invention permits a fast time to market for a customer. For the GDS, supporting a new type of application for flight and prices computation at a massive scale is simple.
- For the GDS, thanks to the optimization of data computation, the resource consumption is rationalized and costs are thus decreased
- Moreover, the resources are under control. They can be dynamically allocated according to volumes to process and timeframe to respect, without reaching limits of the system.

### Brief description of drawings

Reference will now be made, by way of example, to the accompanying drawings, in which:
Figure 1 is a diagram of the massive computation platform for a reservation system in accordance with one embodiment of the present invention;
Figure 2 is a diagram of a general computer system adapted to support the method of a preferred embodiment of the present invention;
Figure 3 shows the software components of a system implementing a preferred embodiment of the present invention and an overall view of all steps of the method according to a preferred embodiment of the present invention;
Figures 4-9 schematically shows the various steps of the method;
Figure 10 is a flow chart of the method steps of a process, in accordance with one embodiment of the present invention.

### Detailed description of the embodiments

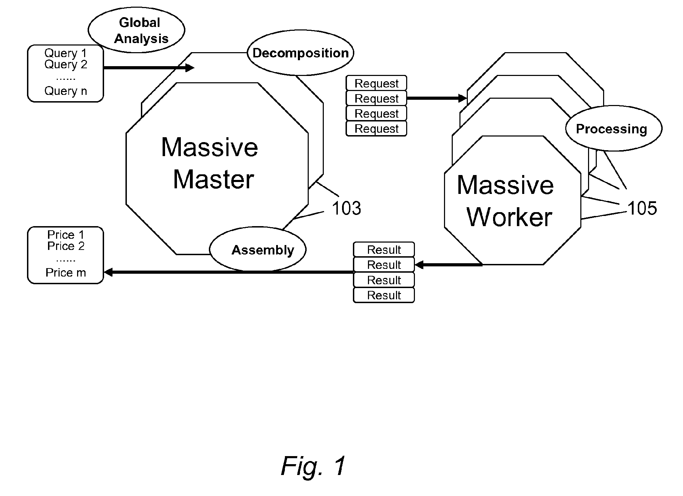

Figure 1 shows a subsystem 101 dedicated to the computation of flights and prices at a massive scale according to a preferred embodiment of the present invention. The data processing is separated from the shopping traffic dedicated to booking.

This subsystem manages queries with a high degree of freedom instead of transactions used for booking applications. The degree of freedom applies e.g. on the date combination (all outbound date of the year, all inbound date until several weeks after outbound date), geographic zones for the origin and the destination, the requested operating carrier (one, several or all possible carriers for requested city pair), all available booking codes, all possible passenger types. Since low-latency is not mandatory for such data computation, timeframe can be different from real time. Processing and resource consumption can be thus spread over a longer time frame. Returning of the results is also spread over the timeframe.

In a preferred embodiment of the present invention the subsystem is organized according a batch model which resources can be dynamically instantiated to cope with high volumes of data. The subsystem performs data processing optimization based on a global queries analysis.

Also it is generic and extensible. Different business logics can be easily plugged to the subsystem to fulfill different customer requirements (pre-shopping, revenue management, fares analysis).

In a preferred embodiment of the present invention the subsystem 101 includes one or more Massive Masters 103 and a plurality of Massive Workers 105. The Massive Masters 103 globally analyze the queries which are then decomposed into optimized requests. Requests are then processed by one or more of the Massive Workers and the results are fed back to the originating Massive Master, which assembles the results into journey solution plus prices.

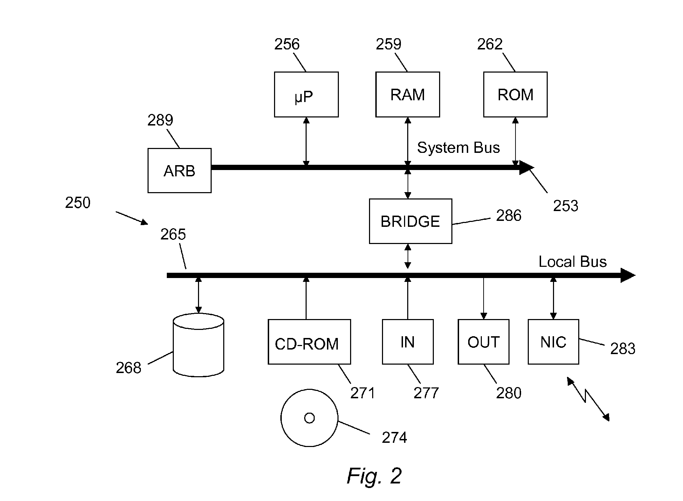

With reference to Figure 2 a generic computer of the system (e.g. computer, reservation server, Massive Master server, Massive Worker server, data base management subsystem, router, network server) is denoted with 250. The computer 250 is formed by several units that are connected in parallel to a system bus 253. In detail, one or more microprocessors 256 control operation of the computer 250; a RAM 259 is directly used as a working memory by the microprocessors 256, and a ROM 262 stores basic code for a bootstrap of the computer 250. Peripheral units are clustered around a local bus 265 (by means of respective interfaces). Particularly, a mass memory consists of a hard-disk 268 and a drive 271 for reading CD-ROMs 274. Moreover, the computer 250 includes input devices 277 (for example, a keyboard and a mouse), and output devices 280 (for example, a monitor and a printer). A Network Interface Card 283 is used to connect the computer 250 to the network. A bridge unit 286 interfaces the system bus 253 with the local bus 265. Each microprocessor 256 and the bridge unit 286 can operate as master agents requesting an access to the system bus 253 for transmitting information. An arbiter 289 manages the granting of the access with mutual exclusion to the system bus 253. Similar considerations apply if the system has a different topology, or it is based on other networks. Alternatively, the computers have a different structure, include equivalent units, or consist of other data processing entities (such as PDAs, mobile phones, and the like).

In a preferred embodiment of the present invention the subsystem performs a global analysis which aims at identifying relevant redundancies between the queries to avoid useless re-processing. Merging of the redundant queries parts has to be efficient in terms of resource consumption and in terms of data access during the processing. The subsystem has to fulfill at the same time functional and technical requirements: it must respect a Service Level Agreement established with the customer (time constraints, quality) on one hand, and respect operational requirements (resource control, impacts on other components) on another hand. The subsystem of a preferred embodiment of the present invention includes two kinds of server:
Massive Masters which hosts the global intelligence required to optimally manage the inputs and the outputs.
Massive Workers which implements the business logic of each product plugged on the Massive Computation Platform.

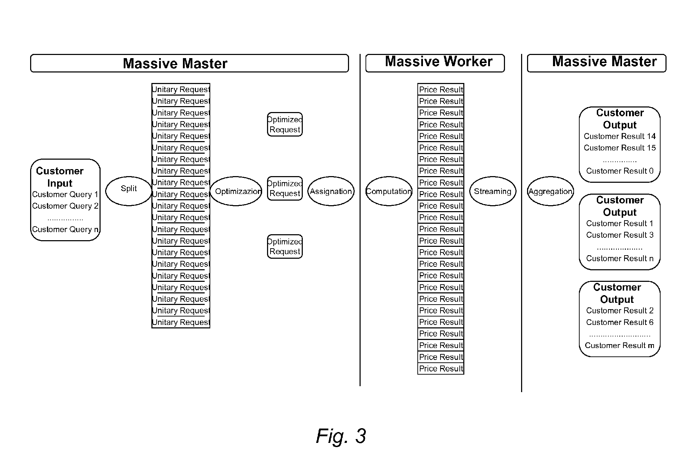

Figure 3 shows the flow of the process according to a preferred embodiment of the present invention. The global flow can be divided into the following six steps/operations which can be performed in parallel:
- SPLIT, where the Massive Master extracts all unitary requests from customer queries;
- OPTIMIZATION, where the Massive Master globally analyses for a smart request merging;
- ASSIGNATION, where the Massive Master smartly routes the requests to the Massive Workers.
- COMPUTATION, where the Massive Worker processes the optimized requests.
- STREAMING, where the Massive Worker manages results volumes.
- AGGREGATION, where the Massive Master groups results according to customer queries.

Each step is described in detail in following paragraphs.

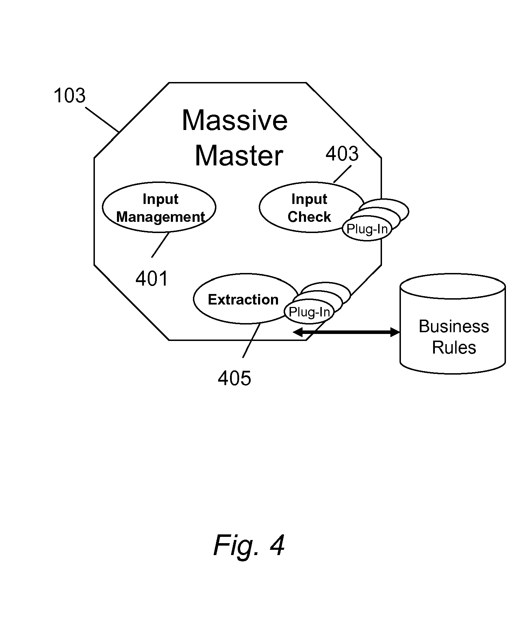

Figure 4 shows a schematic representation of the SPLIT operation, i.e. the Extraction of unitary requests from the query received by the customer. The split operation consists in transforming the queries into unitary requests. A unitary request is the logical equivalent of a transaction without degree of freedom: every date, geographic, passenger, carrier information is set.

The input management module 401 detects a set of queries posted by a customer. If at a given time no query has been received, it can also decide to process a set of queries previously processed. With this feature, the customer is not compelled to post a set of query within a predetermined interval (e.g. everyday). The input management step also decides the frequency of processing of each query: e.g. once or several times a day. The input management module 401 also determines the tasks instantiation to process input volumes. Required resources for following steps are evaluated according to the queries number and to the processing timeframe established with the customer. This guarantees to compute a massive scale of data in a constrained delay.

The input check module 403 checks the inputs both syntactically and semantically. Since this step depends on the product, different plug-ins are added to manage different input types. For a new product or a new product version, a new plug-in is added.

The extraction module 405 creates unitary request from semantic information given by the customer in the queries. The extraction depends both on the product and on the input given by the customer. Therefore this step is pluggable. Moreover, business rules can be applied for some customer functional constraints.

An example of business rules applied in this context could be: request better availability quality (e.g. poll availability to airline) for domestic markets.

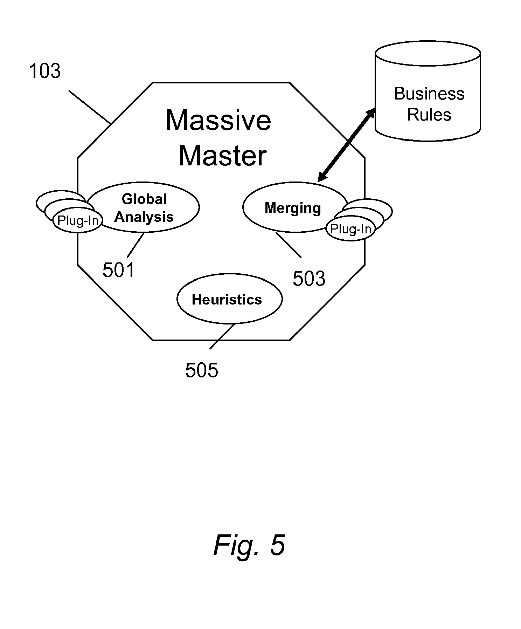

Figure 5 shows a schematic representation of the OPTIMIZATION operation, i.e. the global analysis of the customer's requests. Once unitary requests are generated, another phase takes care of merging redundant parts for computation optimization purpose. This operation consists in several steps detailed bellow. The global analysis module 501 identifies redundancies in unitary requests. For an efficient optimization, this step is based on plug-ins defining for each product the most relevant redundancies to be grouped.

The merging module 503 groups unitary requests to avoid redundancies processing. Several smart merging are possible. The choice of grouping is thus based both on plug-in defining optimal rules specific to a product, and on business rules to suit customer functional constraints.

Business rule example: request grouping is based on timeframe processing whished by the customer. Domestic markets requests have to be processed after office closure hour and thus after last possible manual update, whereas other markets requests can be immediately processed.

For queries which are regularly processed, an important part of generated results will be the same at each process. The heuristic module 505 statistically identifies requests which should generate same results than those returned to the customer at the previous process. These requests will not be processed. Unnecessary price computations are thus reduced. This module economizes on resources consumption. Nevertheless, a good level of accuracy for the global result is guaranteed.

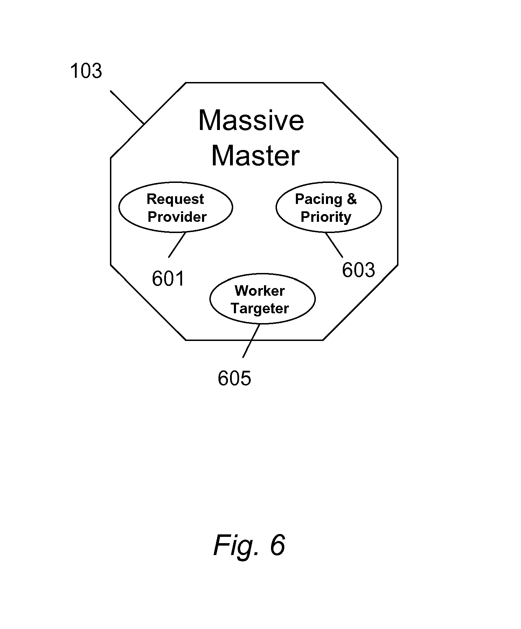

Figure 6 shows a schematic representation of the ASSIGNATION operation, i.e. driving request processing. Once the first merged request is generated, it is processed. The assignation step, running in parallel of the previously described step, drives the attribution of the requests to the Massive Workers according to resources. This operation consists in several steps realized by different modules as explained below. The request provider module 601 selects requests to send to the Massive Workers according to the queries from which they have been generated. The purpose of this module is to permit the system progressively returning to the customer the results of its queries. The requests are selected to compute the global result of a query. Once results of this query are computed, requests relative to another query are selected. Another selection criterion is the authorized processing timeframe of each merged request. For example, some request processing are delayed after the airline office closure hours. Therefore, the last manual updates on the data used for the results computation are taken into consideration.

The pacing and priority module 603 regulates the Massive Workers activity according to available resources by avoiding overloading them. It also manages the priority between the requests to be processed. For example, a queries set has been requested in Fast Track mode and has thus to be processed with a higher priority than a standard set of queries. More resources are dedicated for the computation of these queries.

The Massive Worker targeter module 605 chooses the Massive Workers farm where a request has to be processed. This choice is based both on a technical concern (the resource availability of the Massive Workers) and on a functional concern (Massive Workers farms are dedicated for some markets, products or customers).

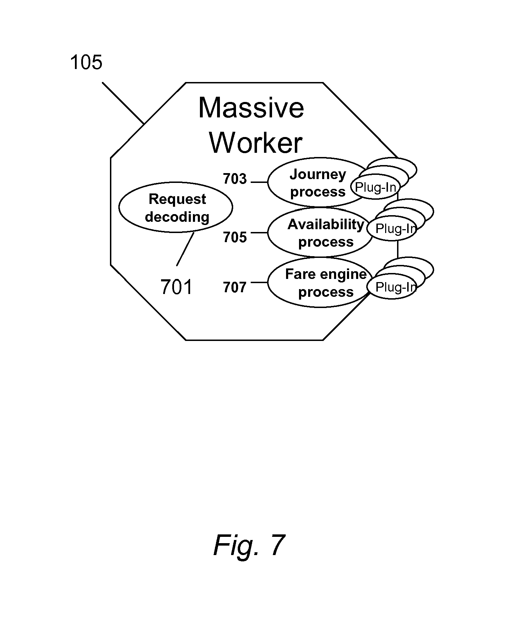

Figure 7 shows a schematic representation of the FARE COMPUTATION operation, i.e. business logic. The Massive Worker implements the business logic of all products provided by the method according to a preferred embodiment of the present invention.

The Request Decoding module 701 decodes the optimized requests provided by the Massive Masters. The process is then driven by calling different modules already existing in the GDS. The called modules and the calling sequence depend on the product. Each called module is based on applicative plug-ins specific to each product.

The journey process module 703 implements the computation of flight solutions of the request. It is in charge of identifying journey combinations from date, geographic and option information given in the request. Journey processing is relying on up-to-date data.

The availability process module 705 implements the checking of journey solution availability. For a better quality level, request can be directly performed to airline companies to rely on more up-to-date data.

The fare engine process module 707 implements price computation of possible solutions to the request, according to information and options given in the request. If only better solutions are requested, it also compares prices to keep only the best.

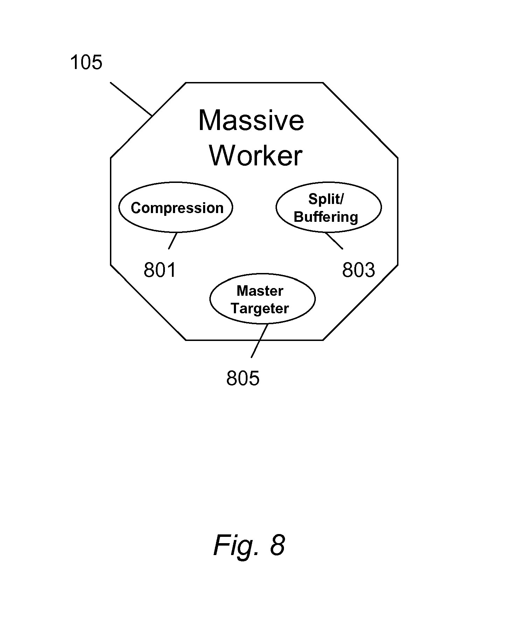

Figure 8 shows a schematic representation of the STREAMING operation, i.e. managing raw results

To manage the huge volumes generated by the computation, operations are required to optimize both communication with the Massive Masters and storage of results. Several modules on the Massive Worker detailed bellow permit this optimization.

The compression module 801 decreases the size of the results, and thus the communication volume between the Massive Workers and the Massive Masters. The volume of the stored data is decreased too. Since this operation consumes processing resources, it is applied only if the gain of communication and storage resources consumption is relevant.

The split / buffering module 803 also permits resource consumption optimization. If the results volume of generated results is too high, it is split into several bundles. The communication with the Massive Masters and the data storage are thus concurrently performed.

If the results volume is too low, it is buffered until being relevant to be managed by a Massive Master. The communication is more efficient since only few storing modules, which process relevant volumes, are required.

The Massive Master targeter 805 chooses the Massive Master. This choice is based both on a technical concern (the resource availability of the Massive Masters) and on a functional concern (Massive Master farms are dedicated for some markets, products or customers).

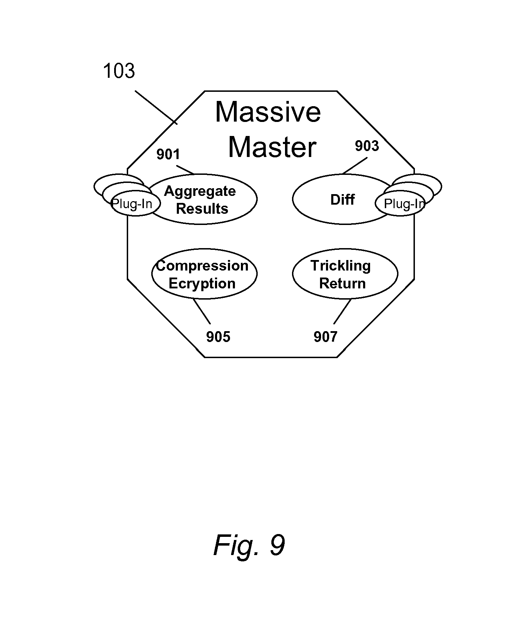

Figure 9 shows a schematic representation of the AGGREGATION operation, i.e. managing customer output

As soon as all the results of a query have been generated, they have to be aggregated and returned to the customer under an appropriate format.

The Aggregate Results module 901 transforms raw results from the Massive Workers into price oriented results. The results are aggregated according to customer queries: the customer receives answers to its questions and not disorderly results. For example, if the customer requested in a query the solutions of a specific market with several options and for all outbound dates of the year, all solutions corresponding to all options and all outbound dates of the query will be aggregated in the reply. A plug-in defines for each product and each customer an expected result format.

The Diff module 903 is a prices packaging option selecting results which have changed from the previous processing. Only new, updated of deprecated results are returned to the customer. Plug-in defines the criteria of differentiation according to the product. This option permits an efficient network transfer between the GDS and the customer. Moreover, the activity on the customer system is decreased since less volume has to be managed.

The compression and encryption module 905 permits an efficient and secure network transfer by decreasing returned volume and ensuring results confidentiality.

The trickling return module 907 regularly transfers by grouping the global result of processed queries. Return is thus spread over a long time scale.

Since the volumes of results are massive, the customer can not wait for the end of the processing before integrating the results to its pre-shopping or revenue management system. Therefore, few minutes after the start of the processing, first results are generated and returned. The transfer is spread over the processing timeframe. Results can thus be progressively integrated into the customer pre-shopping or revenue management system.

### Examples of use

### Example one: Product for a Pre-Shopping system.

Let's consider a product dedicated to a Pre-Shopping system feeding. It computes, for each flight solution matching the specified city pairs and carrier, the lowest applicable price for all combinations of outbound dates and stay durations. The computation relies on all data automatically filed to the GDS through the intermediary of tariff publisher. Recommendations are returned only if seats in flight are available. Since checking the seat availability consumes a lot of resources, this operation is performed only for the queries having the partners of the customer as carrier.

By creating the unitary requests, the split module, thanks to business rules, is able to identify the partners in requests and flags those requests to enable "seat availability checking".

The optimization module merges journey requests preventing redundancies due to date combinations. The merge operation uses a plug-in taking into consideration optimizations for Fare Engine processing specific to this product.

### Example two: Product for a Revenue Management system

Let's consider a product dedicated to a Revenue Management feeding. It computes, for each flight solution matching the specified market, the lowest applicable price for all combinations of outbound dates, stay durations, advance purchase condition and Reservation Booking Code (henceforth RBD). The same RBD has to be used on whole travel. The computation relies on all data automatically filed to the GDS through the intermediary of tariff publisher. The computation of the requests with outbound date in the next 45 days have to rely on all data manually filed to the GDS by the customer during the opened office hours of the day.

The optimization module bundles date combinations and advance purchase to optimize the computation of journey solutions. At merging time, it applies business rule to separate requests with outbound date in the next 45 days. Their processing is delayed after customer's office closure to take into consideration manual updates filed to the GDS.

The fare computation module uses dedicated Journey process plug-in returning RBD for flight solutions. It does not use availability process plug-in since product is not dedicated to shopping or pre-shopping business.

Since this product generates several thousands results per optimized requests (due to combination of dates, advance purchase and RBD), the streaming module performs a splitting of the raw results on Massive Workers.

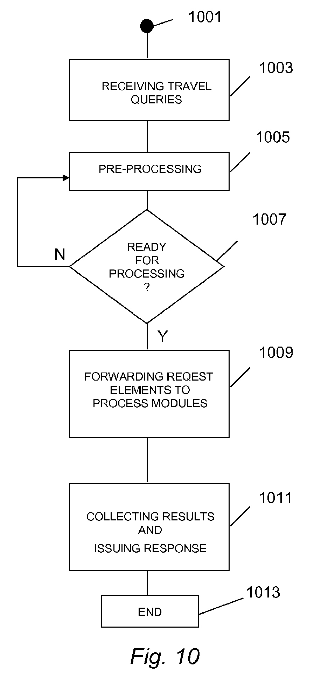

The method described above is also represented in the diagram shown in figure 10. The method begins at black circle 1001 and then goes to box 1003 where travel queries are received by the system. Such queries are sent by users looking for pre-shopping information, i.e. information on e.g. trip availability, fares, time or general information not necessarily aimed at completing a reservation. In a preferred embodiment of the present invention the system receiving the queries and performing the database enquiries for satisfying user queries is separate from the actual reservation system, but those skilled in the art will appreciate that the two systems (pre-shopping and reservation) could be integrated together. Once the travel queries are received, the control goes to box 1005 where the pre-processing of the queries is performed. The moment when the pre-processing is invoked or the event triggering the start of pre-processing can depend on several factors and it could be even customized by the system administrator or by the single users: for example the pre-processing could be done every pre-determined period of time (e.g. at the end of day or every hour); it could be automatically performed when a critical mass of queries is received or when the maximum capacity is reached; or again it could be requested by the administrator or by users. According to a preferred embodiment of the present invention the pre-processing of travel queries include a global analysis of the queries which are decomposed into simple request elements (also called "unitary requests" in Figure 3) in order to optimize the database enquiry activity. In a preferred embodiment of the present invention each query is analysed by a Massive Master (pre-process module) which extract one or more simple request elements. These simple request elements are then rearranged in order to avoid duplications and are organised (divided) into subsets (also called "optimized request" in Figure 3) according to predetermined criteria which take into consideration several factors and also business rules as explained above with reference to Figure 5. This pre-processing continues until all travel queries have been preprocessed (step 1007). Once the requests have been optimized, the Massive Master assigns each subset to the right Massive Worker and forwards the requests subset to the right Massive Worker (step 1009). Each Massive Worker will then perform the enquiries in the database to satisfy users' request, e.g. trip fares, trip availability just to make some examples. The results of the enquiries are then collected and transmitted back to the Massive Master to be provided to the users who submitted the travel queries by issuing a response (step 1011). In a preferred embodiment of the present invention the results are aggregated by the Massive Master, as explained above, before being provided to users. The process then ends at step 1013. In the example described above with reference to Figure 10 the system performing the method includes one Massive Master and a plurality of Massive Workers, however other implementations are possible, e.g. more than one Massive Master working in parallel or even one single Massive Worker processing the plurality of subsets. Also the Massive Workers and Massive Masters do not necessarily correspond to different physical machine, but they could simply be applications working on the same system.

It will be appreciated that alterations and modifications may be made to the above without departing from the scope of the disclosure. Naturally, in order to satisfy local and specific requirements, a person skilled in the art may apply to the solution described above many modifications and alterations. Particularly, although the present disclosure has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the disclosure may be incorporated in any other embodiment as a general matter of design choice.

Similar considerations apply if the program (which may be used to implement each embodiment of the disclosure) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibres, wireless connections, networks, broadcast waves, and the like; for example, the medium may be of the electronic, magnetic, optical, electromagnetic, infrared, or semiconductor type.

In any case, the solution according to the present disclosure lends itself to be carried out with a hardware structure (for example, integrated in a chip of semiconductor material), or with a combination of software and hardware.

## Claims

1. A method in a reservation system for generating priced travel solutions according to non-binding travel queries, the reservation system having access to a plurality of travel databases containing information on travel availability and fares according to a plurality of parameters, each travel query including a set of preferences each preference being related to a parameter selected among the plurality of parameters, the method including:
- receiving a plurality of travel queries, each travel query being associated to a user;
- pre-processing the plurality of travel queries, the pre-processing including:
- extracting from each query at least one simple request element;
- sorting the plurality of request elements according to at least one parameter;
- in case of more than one request element containing the same preference for the same at least one parameter, deleting duplicated request elements;
- dividing the plurality of request elements into subsets according to predetermined criteria;
- forwarding each subset of request elements to a process module which executes the request element interrogating the plurality of databases;
- collecting the results from the process modules and issuing a response to users for each travel query.

2. The method of claim 1 wherein the results collected from process modules are aggregated before the response is issued to users.

3. The method of any preceding claim wherein the step of executing the request element of each subset of request elements is performed in parallel by a plurality of process modules.

4. The method of claim 3 wherein the step of dividing the plurality of request elements includes assigning each subset to one of the plurality of process modules according to the predetermined criteria.

5. The method of any preceding claim wherein the step of pre-processing the plurality of travel queries is performed in parallel by a plurality of pre-process modules.

6. The method of claim 5 further comprising:
- for the result of each request element, the process modules selecting one of the plurality of pre-process modules to which forward the result for aggregation and issuing the response to the user.

7. The method of any preceding claim wherein the plurality of parameters include date and geographic location.

8. A computer program comprising instructions for carrying out the steps of the method according to any preceding claim, when said computer program is executed on a computer.

9. A computer program product including computer readable means embodying the computer program of claim 8.

10. A software tool dedicated to feed a pre-shopping system including the method of any claim 1 to 7.

11. A software tool dedicated to feed a revenue management system including the method of any claim 1 to 7.

12. A software tool dedicated to feed a fare analysis system including the method of any claim 1 to 7.

13. A data processing system for managing pre-shopping travel queries, the data-processing system having access to a plurality of travel databases containing information on travel availability and fares according to a plurality of parameters, each travel query including a set of preferences each preference being related to a parameter selected among the plurality of parameters, wherein the system comprises one or more components adapted to perform the method of any claim 1 to 7.

14. A service deployed in a data processing system for implementing the method of any claim 1 to 7.
